# EUROPÄISCHE PATENTSCHRIFT

(11) **EP 1 010 070 B1**
(45) Veröffentlichungstag und Bekanntmachung des Hinweises auf die Patenterteilung: **23.10.2002**
(21) Anmeldenummer: 98948801.0
(22) Anmeldetag: 17.08.1998
(51) Int. Cl.: G06F 9/45

(54) **VERFAHREN ZUM UMSETZEN EINES OBJEKTCODES IN EINEN PROGRAMMCODE**
METHOD FOR CONVERTING AN OBJECT CODE INTO A PROGRAMME CODE
PROCEDE POUR CONVERTIR UN CODE OBJET EN UN CODE PROGRAMME

(30) Priorität: 01.09.1997 DE 19738162
(43) Veröffentlichungstag der Anmeldung: 21.06.2000
(73) Patentinhaber: Fujitsu Siemens Computers GmbH, 81739 München (DE)
(72) Erfinder: BACHMANN, Werner, D-80636 München (DE)
(74) Vertreter: Epping, Wilhelm, Dipl.-Ing.
(86) Internationale Anmeldenummer: DE9802374
(87) Internationale Veröffentlichungsnummer: WO99012094

(56) Entgegenhaltungen:
- EP-A- 0 372 835
- DE-A- 19 617 842
- SITES R L ET AL: "BINARY TRANSLATION" COMMUNICATIONS OF THE ASSOCIATION FOR COMPUTING MACHINERY, Bd. 36, Nr. 2, Februar 1993, Seiten 69-81, XP000358267 New York, US
- ANDREWS K ET AL: "MIGRATING A CISC COMPUTER FAMILY ONTO RISC VIA OBJECT CODE TRANSLATION" ACM SIGPLAN NOTICES, Bd. 27, Nr. 9, 1. September 1992, Seiten 213-222, XP000330602

## Beschreibung

Die Erfindung betrifft ein Verfahren zum Umsetzen eines Objektcodes für eine Ursprungshardware in eine äquivalenten Programmcode nach dem Oberbegriff des Anspruchs 1. Insbesondere betrifft die Erfindung ein Verfahren zum Umsetzen eines für eine frühere Prozessorgeneration geeigneten Objektcodes in einen Programmcode, der auf aktuellen Hardware-Plattformen lauffähig ist.

Die zunehmenden Anforderungen an das Leistungsvermögen von Rechenanlagen machen vielfach den Wechsel zu neuen Computergenerationen, zum Beispiel von CISC- zu RISC-Rechnern, erforderlich. Weil die für einen bisherigen Rechner vorhandenen Programme jedoch einen hohen wirtschaftlichen Wert darstellen und für den reibungslosen Ablauf von unternehmenskritischen Vorgängen entscheidend sein können, ist es wünschenswert oder sogar unabdingbar, die bestehende Softwarebasis weiter verwenden zu können.

Ein Umschreiben der Programme von Hand auf die Zielhardware ist sehr zeit- und kostenaufwendig. Daher sind unterschiedliche Techniken der automatischen Transformation vorgeschlagen worden.

Falls die vorhandenen Programme oder Teile davon im Quellcode einer standardisierten Hochsprache vorliegen, können sie meist durch einfache Neukompilierung auf die neue Zielhardware umgesetzt werden. Für Anwendungsprogramme, die als Assembler-Sourcecode für die Ursprungshardware vorliegen, ist ebenfalls eine automatische Umsetzung möglich. Ein solches Verfahren, das jedoch nicht zum Umsetzen eines Objektcodes vorgesehen ist, ist in der nicht vorveröffentlichten deutschen Patentanmeldung DE 196 17 842 A1 beschrieben.

Oft sind jedoch Anwenderprogramme lediglich in Form eines auf der Ursprungshardware lauffähigen Objektcodes vorhanden. Dies ist insbesondere bei Anwendungen der Fall, die im Laufe der Jahre auf Objektcode-Ebene modifiziert worden sind. Der ursprüngliche Sourcecode für solche Programme ist, wenn er überhaupt noch vorhanden ist, im Regelfall unbrauchbar, da er die vorgenommenen Änderungen nicht enthält.

Es ist bekannt, Objektcode für eine Ursprungshardware auf der Zielhardware in der Art eines Befehlsinterpreters dynamisch zu transformieren. Eine solche Emulation der Ursprungshardware ist jedoch sehr rechenzeitaufwendig, so daß die höhere Leistungsfähigkeit der neuen Hardware oft wieder zunichte gemacht wird. Mit Verfahren zur statischen Programmtransformation lassen sich Programme erzeugen, die im Regelfall wesentlich schneller auf der Zielhardware ablaufen.

Aus dem US-Patent 5 313 614 ist ein Verfahren zu statischen Umwandlung von Objektcode zwischen Computersystemen mit unterschiedlichen Hardwarearchitekturen bekannt. Bei dem umgesetzten Programm wird im RAM der Zielmaschine ein vollständiges Abbild des Adreßraumes der Ursprungsmaschine gehalten. Dieses Abbild beinhaltet beispielsweise einen Bildwiederholspeicher und Adressen für Ein-/Ausgaberegister. Speicherzugriffe des umgesetzten Programms erfolgen auf die entsprechenden Adressen des Abbilds. Dabei werden Zugriffe auf Adressen, die in der Ursprungshardware einen Seiteneffekt auslösen, abgefangen und geeignet umgesetzt.

Dieses Verfahren ist daher zur Umsetzung von Objektcode vorgesehen, der unmittelbar auf die Hardware der Ursprungsmaschine zugreift. Gerade'wegen der Unterstützung hardwarenaher Funktionen ist das Verfahren jedoch relativ aufwendig. Dies gilt sowohl hinsichtlich des für die Umsetzung benötigten Rechenaufwands als auch für die Ausführung des umgesetzten Programms.

Der Artikel "Binary Translation" von R.L. Sites et al. in der Zeitschrift Communications of the Association for Computing Machinery, Band 36, Nr. 2, Februar 1993, Seiten 69-81, zeigt ein Verfahren zur Binärcodeumsetzung, bei dem existierende VAX- und MIPS-Programme in Binärcode für RISC-Rechner umgesetzt werden. Dieses Verfahren weist die Merkmale des Oberbegriffs von Anspruch 1 auf. Ferner ist vorgesehen, den gesamten ursprünglichen Objektcode (Daten- und Programmteil) in den generierten Binärcode aufzunehmen. Bei dem Verfahren wird Maschinencode für Alpha-AXP-Prozessoren erzeugt, um eine möglichst unmittelbare Abbildung der Strukturen der Ursprungshardware auf Strukturen der Zielhardware zu erhalten.

Aus dem Artikel "Migrating a CISC Computer Family onto RISC via Object Code Translation" von K. Andrews at al. in ACM SIGPLAN Notices, Band 27, Nr. 9, September 1992, Seiten 213-222, ist es bekannt, bestehenden CISC-Objektcode in optimierten RISC-Objektcode umzusetzen.

Der Artikel "A Methodology for Decompilation" von C. Cifuentes et al. in XIX Conferencia Latinoamericana de Informätica, Buenos Aires, Argentinien, August 1993, Seiten 257-266, erwähnt zunächst frühe Arbeiten auf dem Gebiet der Dekompilierung von Objektcode in hochsprachlichen Sourcecode. Ferner schlagen die Autoren eine eigene Vorgehensweise für diese Dekompilierung vor. Dabei wird über mehrere Zwischenstufen ein hochsprachlicher Programmcode erzeugt, der möglichst weitgehend hochsprachliche Konstrukte aufweist. Entsprechend werden Speicherzugriffe des ursprünglichen Objektcodes in globale und lokale Variablen des hochsprachlichen Programmcodes umgesetzt.

Die Erfindung hat demgemäß die Aufgabe, ein Verfahren zum Umsetzen eines Objektcodes in einen äquivalenten Programmcode bereitzustellen, das hohe Flexibilität bei möglichst hoher Effizienz hinsichtlich der eigentlichen Umsetzung und hinsichtlich des Ablaufs des umgesetzten Programmcodes bietet. Insbesondere soll das Verfahren zur effizienten Umsetzung von Objektcode für Anwenderprogramme geeignet sein, also von nicht-privilegiertem Objektcode.

Erfindungsgemäß wird diese Aufgabe durch ein Verfahren mit den Merkmalen des Anspruchs 1 gelöst.

Die Erfindung geht von der. Grundidee aus, den Objektcode in einen äquivalenten Programmcode umzusetzen, der auf den Datenstrukturen des ursprünglichen Objektcodes operiert. Damit wird die schwierige oder sogar unlösbare Transformation von Datenstrukturen des Objektcodes in Datenstrukturen einer anderen Programmiersprache vermieden.

Die Erfindung ermöglicht es, Anwenderprogramme, die beispielsweise im Objektcode für das System 390 vorliegen, auf einfache. Weise auf andere Hardwareplattformen, beispielsweise auf RISC-Hardware, zu portieren. Dadurch, daß zumindest ein Datenteil des ursprünglichen Objektcodes in den erzeugten Programmcode aufgenommen wird, steht dieser Datenteil für Speicherzugriffe auf die Datenstrukturen des ursprünglichen Objektcodes unmittelbar zu Verfügung. Andererseits wird höchstens der vollständige Objektcode in den Programmcode aufgenommen. Eine Verwaltung des vollständigen Adreßraumes der Ursprungshardware, der um ein Vielfaches größer als der Objektcode sein kann und auf Speicherzugriffe mit Seiteneffekten überwacht werden muß, ist daher nicht erforderlich.

In der hier gebrauchten Wortwahl ist unter einem "Programmcode" nicht notwendigerweise eine einzige Datei zu verstehen. Der Programmcode kann vielmehr aus mehreren Teilen gebildet sein, aus denen erst durch Kompilier- und/oder Assemblierund/oder Bindevorgänge ein ablauffähiges Programm erzeugt wird. Ebenso ist unter einem Programm-, Daten- oder Verknüpfungsteil nicht notwendigerweise ein zusammenhängender Speicherbereich zu verstehen, sondern jeder der genannten Teile kann aus mehreren Abschnitten und/oder Speicherbereichen und/oder Routinen gebildet sein.

Erfindungsgemäß werden Zugriffe auf die Datenstrukturen des Objektcodes für die Ursprungshardware zumindest teilweise, vorzugsweise aber vollständig beibehalten. Ein vollständiges Beibehalten erleichtert den Umsetzvorgang. Es kann jedoch auch vorgesehen sein, bestimmte Klassen von Datenstrukturen zu erkennen und diese, wenn möglich, auf besonders effiziente Art unabhängig von ursprünglichen Objektcode umzusetzen.

Bevorzugt wird der Datenteil des umgesetzten Programmcodes ausschließlich von dem Objektcode für die Ursprungshardware oder Teilen davon gebildet und weist keine. sonstigen Bestandteile, beispielsweise hardwarenahe Adressen, auf.

Erfindungsgemäß wird als Programmteil des umgesetzten Programmcodes ein Sourcecode einer höheren Programmiersprache erzeugt. Unter einer höheren Programmiersprache soll hier eine Sprache verstanden werden, die Konstrukte wie Gleitkomma-Funktionen und/oder Funktionsaufrufe und/oder benannte Variable und/oder ein Typensystem aufweist. Insbesondere ist vorgesehen, als höhere Programmiersprache für den Programmteil des umgesetzten Programmcodes die Sprache C oder eine verwandte Programmiersprache zu verwenden. Der Einsatz einer derartigen, hardwareunabhängigen Programmiersprache erhöht die Flexibilität des Verfahrens, weil C-Kompiler für praktisch alle Hardwarearchitekturen möglicher Zielmaschinen verfügbar sind.

In bevorzugten Ausführungsformen, bei denen eine höhere Programmiersprache für den Programmteil des umgesetzten Programmcodes verwendet wird, werden die Register der Ursprungshardware durch Variable der höheren Programmiersprache modelliert. Fernen können Prozedur- und/oder Funktionsaufrufe zur einfacheren und strukturierten Nachbildung komplexer Befehle der Ursprungshardware eingesetzt werden. Diese durch eine höhere Programmiersprache gegebenen Möglichkeiten erleichtern den Umsetzvorgang und bewirken, daß ein relativ übersichtlicher Programmcode erzeugt werden kann. Daher kann der erzeugte Programmcode gegebenenfalls leichter von Hand weiter modifiziert werden.

Sprünge im ursprünglichen Objektcode werden vorzugsweise über eine Sprungtabelle im transformierten Programmcode ausgeführt. Dies ist insbesondere dann erforderlich, wenn die verwendete höhere Programmiersprache nur eingeschränkte Sprungmöglichkeiten aufweist.

Bevorzugt ist das Verfahren zum Umsetzen von nicht-privilegiertem Objektcode vorgesehen. Ein derartiger Objektcode weist nur wenige oder gar keine hardwarenahen Befehle auf. Dies erleichtert den Umsetzvorgang.

Vorzugsweise wird eine Analyse des Objektcodes hinsichtlich seiner Programm- und Datenteile vorgenommen. Abschnitte des ursprünglichen Objektcodes, die sicher als Programmteile erkannt werden, brauchen nicht in den Datenteil des erzeugten Programmcodes aufgenommen zu werden. Für Abschnitte, die sicher als Datenteile erkannt werden, brauchen keine Befehlssequenzen im Programmteil des generierten Programmcodes erzeugt zu werden. Abschnitte, die nicht zuverlässig identifiziert werden können, müssen in den Datenteil des Programmcodes aufgenommen und zusätzlich als Befehlssequenzen in den Programmteil. des Programmcodes eingefügt werden.

In bevorzugten Ausführungsformen enthält der erzeugte Programmcode einen Verknüpfungsteil, um gegenseitige Aufrufe zwischen umgesetztem Programmcode und/oder ursprünglichem Objektcode und/oder weiteren Programmodulen zu ermöglichen.

Ein Ausführungsbeispiel der Erfindung, das vom Erfinder gegenwärtig als der'beste Weg zum Ausführen der Erfindung angesehen wird, sowie mehrere Ausführungsvarianten werden im folgenden unter Hinweis auf die Zeichnungen genauer beschrieben. Es stellen dar:
**FIG 1** eine schematische Darstellung zur Erläuterung des Grundprinzips des erfindungsgemäßen Verfahrens;
**FIG 2** ein Flußdiagramm der Umsetzung eines Objektcodes für eine Ursprungshardware in einen Objektcode für eine Zielhardware;
**FIG 3** eine schematische Darstellung des durch die Umsetzung erzeugten Programmteils;
**FIG 4** eine schematische Darstellung von Aufrufbeziehungen zwischen zwei Objektcode-Modulen; und
**FIG 5** eine Darstellung nach **FIG 4,** wobei eines der Objektcode-Module in einen Programmcode umgesetzt worden ist.

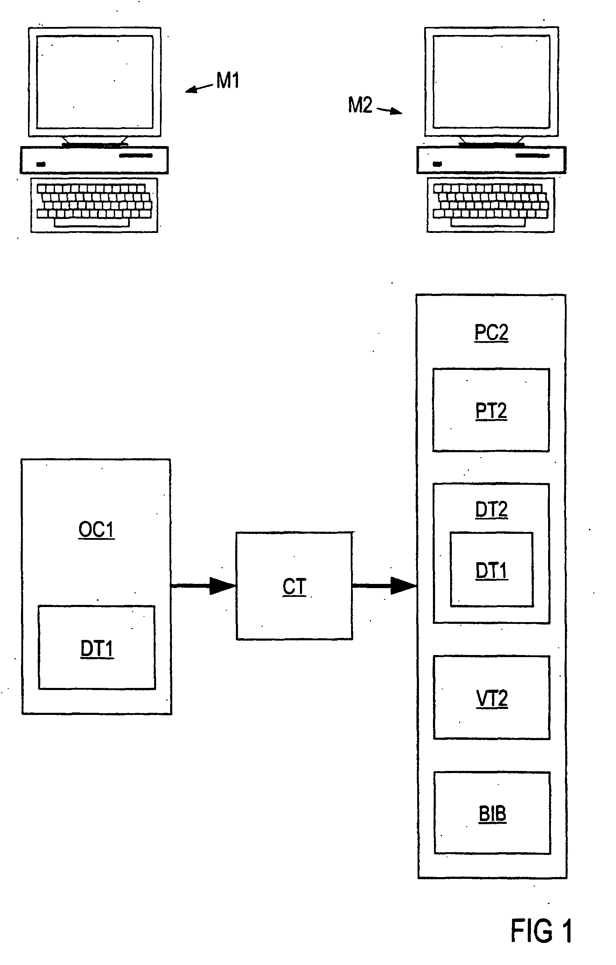

In **FIG 1** wird ein auf einer Ursprungshardware M1 lauffähiger Objektcode OC1 mittels eines Codetransformators CT in einen Programmcode PC2 umgesetzt, der für eine Zielhardware M2 vorgesehen ist. Der Objektcode OC1 weist einen Datenteil DT1 auf, der in mehreren einzelnen Abschnitten im Objektcode OC1 verteilt ist.

Der Programmcode PC2 besteht aus mehreren Teilen, die in getrennten Dateien gespeichert sind. Ein Programmteil PT2 enthält Sourcecode in der Programmiersprache C. Ein Datenteil DT2 enthält eine vollständige Kopie des Datenteils DT1 des Objektcodes OC1 für die Ursprungshardware M1. Ein Verknüpfungsteil VT2 ermöglicht gegenseitige Aufrufe zwischen dem Programmcode PC2 und externen Routinen. Ferner ist im Programmcode PC2 eine Bibliothek BIB mit Assemblerroutinen zum Ausführen komplexer oder hardwarenaher Funktionen (beispielsweise von Arithmetik-Funktionen, insbesondere Gleitkomma-Arithmetik) vorgesehen. Der Programmcode PC2 ist nicht unmittelbar auf der Zielhardware M2 lauffähig, sondern muß erst kompiliert beziehungsweise ässembliert und gebunden werden.

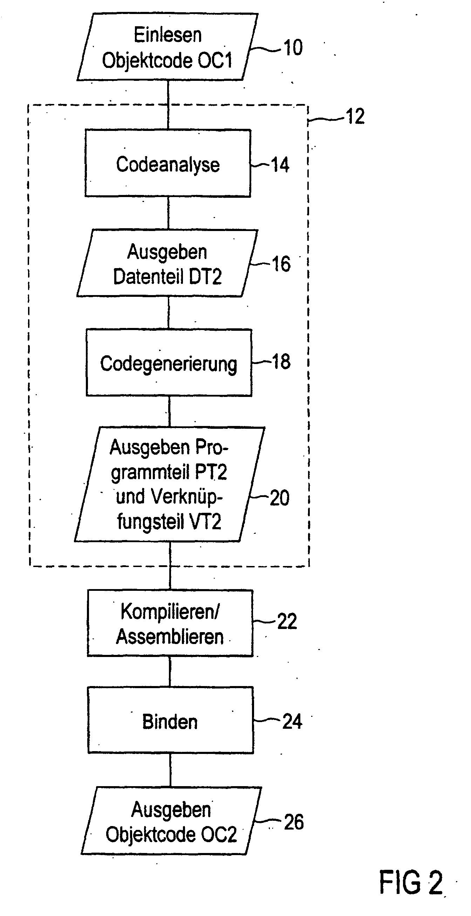

**FIG 2** zeigt den Vorgang des Umsetzens des Objektcodes OC1 für die Ursprungshardware M1 in einen Objektcode OC2 für die Zielhardware M2. In Schritt 10 wird der ursprüngliche Objektcode OC1 eingelesen. Die Schritte zum Erzeugen des Programmcodes PC2 sind in **FIG 2** in einem Block 12 zusammengefaßt. Genauer gesagt, wird zunächst der eingelesene Objektcode OC1 einer Codeanalyse (Schritt 14) unterzogen. Das Ziel der Codeanalyse ist es, den Objektcode OC1 in Code- und Datenteile zu zerlegen, was allerdings nicht immer eindeutig möglich ist.

Bei der Codeanalyse in Schritt 14 wird von einer bekannten Startadresse aus der mögliche Programmablauf im Objektcode OC1 verfolgt. Dazu wird der Objektcode OC1 Befehl für Befehl ab der Startadresse interpretiert, und die erreichten Befehle werden als solche gekennzeichnet. Unbedingte Sprünge werden ausgeführt. Jeder bedingte Sprung eröffnet dagegen zwei Pfade, die zu durchlaufen sind. Zunächst werden alle Bedingungen als erfüllt angenommen. Wird das Programmende oder ein bereits durchlaufener Codeteil erreicht (letzteres ist bei Schleifenrücksprüngen der Fall), wird der Adreßpegel auf den zunächst ausgeführten bedingten Sprung zurückgeschaltet, und der alternative Pfad (Bedingung nicht erfüllt) wird durchlaufen.

Auf diese Weise werden in der Art eines Backtracking-Algorithmus nach und nach alle bedingten Sprünge abgearbeitet. Im Ergebnis sind dann alle möglichen Pfade im Objektcode OC1 durchlaufen und als Befehle markiert worden. In einem letzten Schritt der Codeanalyse 14 werden die nicht erreichten Restbereiche-des Objektcodes OC1 nach gültigen Operationscodes abgesucht. Bereiche, die beim Durchlauf nicht erreicht wurden, aber eine Häufung gültiger Befehlscodes enthalten, werden als nicht eindeutig klassifizierbar bewertet, weil sie beim Programmablauf gegebenenfalls durch Sprünge mit berechnetem Sprungziel erreichbar sein könnten.

Als Ergebnis der Codeanalyse 14 werden Teile des Objektcodes OC1 als Daten, Teile als Code und Teile als nicht sicher klassifizierbar eingestuft. Die nicht sicher klassifizierbaren Abschnitte werden sowohl in C-Code umgesetzt als auch in den Datenteil DT2 aufgenommen. Daher kann der Datenteil DT2 möglicherweise umfangreicher sein als notwendig, und der C-Code im Programmteil PT2 kann "toten" Code enthalten. Die Korrektheit des umgesetzten Programmcodes PC2 bleibt dennoch gewährleistet.

In Ausführungsalternativen können andere Verfahren und andere Heuristiken zur Bestimmung der Daten- und Codeabschnitte des Objektcodes OC1 herangezogen werden. In einer weiteren Ausführungsalternative wird auf die Codeanalyse 14 verzichtet und der vollständige Objektcode OC1 wird in dem Datenteil DT2 des Programmcodes PC2 aufgenommen und als C-Code im Programmteil PT2 umgesetzt. Alternativ dazu kann das Ergebnis der Codeanalyse 14 nur zur Bestimmung des Codeteils oder des Datenteils DT1 des Objektcodes OC1 herangezogen werden. Als jeweils anderer Teil wird dann der vollständige Objektcode OC1 verwendet.

Der bei der Codeanalyse 14 identifizierte Datenteil DT1 des Objektcodes OC1, der aus mehreren Abschnitten-bestehen kann, wird in Schritt 16 als Datenteil DT2 in eine Datei ausgegeben.

In Schritt 18 werden aus dem Objektcode OC1 und den bei der Codeanalyse 14 gewonnen Informationen der Programmteil PT2 und der Verknüpfungsteil VT2 des Programmcodes PC2 erzeugt. Einzelheiten dieses Vorgangs werden unten beschrieben. Die genannten Teile PT2 und VT2 des Programmcodes PC2 werden in Schritt 20 in getrennte Dateien ausgegeben.

In Schritt 22 wird der Programmteil PC2 mittels eines an sich bekannten C-Kompilers kompiliert, und die Assemblerroutinen im Verknüpfungsteil VT2 werden mittels eines an sich bekannten Assemblers in Objektcode umgewandelt. In Schritt 24 werden die in den Schritten 16 und 22 erzeugten Module sowie die für die Zielhardware M2 spezifische, global vorgegebene Bibliothek BIB gebunden. Der resultierende, auf der Zielhardware M2 ablauffähige Objektcode OC2 wird in Schritt 26 ausgegeben.

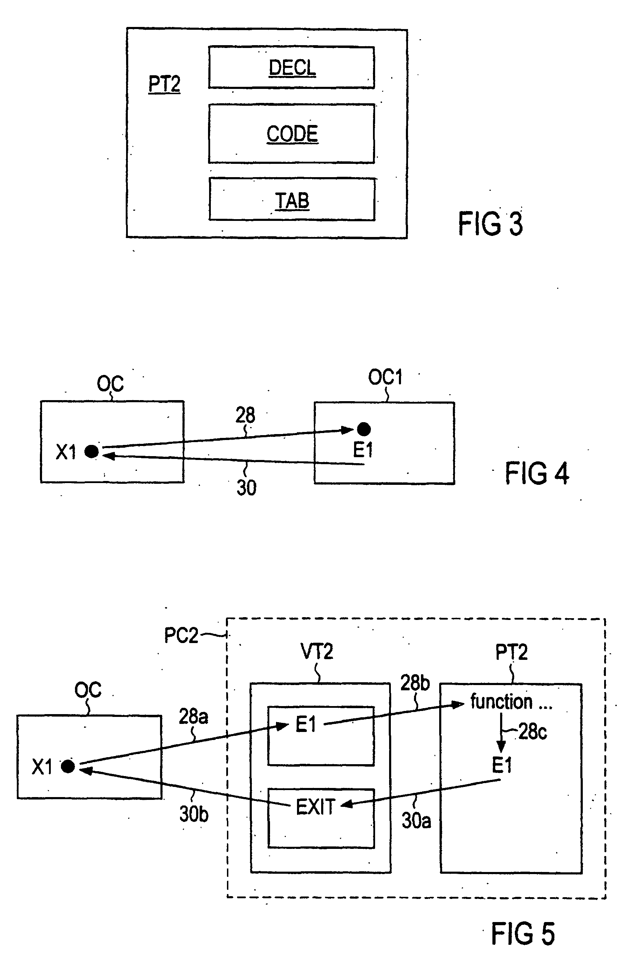

Der bei der Codegenerierung in Schritt 18 (**FIG 2**) erzeugte Programmteil PT2 weist die in **FIG 3** veranschaulichte Struktur auf. Genauer gesagt, besteht der Programmteil PT2 aus einem Deklarationsteil DECL, einem Codeteil CODE und einer Sprungtabelle TAB. Hier soll zunächst der Fall eines eigenständig ablauffähigen Programmteils PT2 betrachtet werden. Ein derartiger Programmteil PT2 ist als "main"-Modul der Sprache C ausgestaltet.

Im Deklarationsteil DECL sind Definition von Datenstrukturen enthalten, die die nicht-privilegierten Hardwarestrukturen der Ursprungsmaschine M1 nachbilden. Weil das Umsetzverfahren nur für nicht-privilegierte Befehle vorgesehen ist, müssen lediglich einige wenige Arten von Prozessorregistern (beispielsweise allgemeine Register und Bedingungscode-Register) nachgebildet werden. Der Einfachheit halber werden die Datenstrukturen für Prozessorregister als Vereinigungsmenge von allen Datentypen definiert, die die Register enthalten können. Dies ist in der folgenden beispielhaften Typdefinition in der Sprache C ausgedrückt:

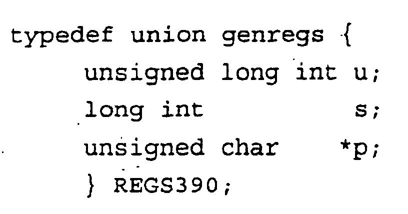

Für die einzelnen Register werden entsprechende Deklarationen in den Deklarationsteil DECL aufgenommen, beispielsweise:
#define MAX390REGS 20
REGS390 r[MAX390REGS];

Um den Codeteil CODE zu erzeugen, werden für jeden Befehl des Objektcodes OC1 entsprechende Befehle der Sprache C generiert. Welche Abschnitte des Objektcodes OC1 als Befehle aufzufassen sind, wird aus dem Ergebnis der Codeanalyse 14 bestimmt. In dem hier beschriebenen Ausführungsbeispiel werden alle Abschnitte des Objektcodes OC1 übersetzt, die nicht sicher als Daten des Datenteils DT1 identifiziert wurden.

Zu jedem Assemblerbefehl im Objektcode OC1 wird eine Gruppe von C-Befehlen im Codeteil CODE erzeugt, und zwar zunächst ein eindeutiges Label (Sprungzielmarke), dann eine Umsetzung des Assemblerbefehls und schließlich Befehle zum Nachbilden von Seiteneffekten des Assemblerbefehls. Die erzeugten C-Befehle spiegeln die Transformationen wieder, die der umgesetzte Assemblerbefehl auf den Registern und im Speicher der Ursprungshardware M1 ausführt.

Das für jeden Assemblerbefehl erzeugte Label ist aus der Adresse des umgesetzten Assemblerbefehls abgeleitet. Ferner wird diese Adresse auch als symbolische Bezeichnung in einer haxadezimalen Schreibweise definiert. Das Label und die symbolische Bezeichnung werden in der noch zu beschreibenden Sprungzieltabelle TAB verwendet. Für einen Befehl, der sich im Objektcode OC1 an der hexadezimalen Adresse 201A befindet, werden daher zunächst die folgenden Einträge im Codeteil CODE erzeugt:
1_201A:
#define L_201A 8218

Nun wird der Assemblerbefehl umgesetzt, indem seine Wirkung auf den Registern und im Speicher der Ursprungshardware M1 durch C-Befehle nachgebildet wird. Beispielsweise wird der Objektcode für den Register-Subtraktionsbefehl
SR R3, R2
in die C-Notation
r[3] .s -= r[2] .s;
umgesetzt.

Um Seiteneffekte der Assemblerbefehle im Objektcode OC1 nachzubilden; müssen neben den allgemeinen Registern einige weitere Elemente der Ursprungshardware M1 simuliert werden. Insbesondere ist dies ein Bedingungscode-Register, das automatisch in Abhängigkeit vom Ergebnis bestimmter Befehle verändert und bei bedingten Sprüngen abgefragt wird. Bei dem hier beispielhaft beschriebenen Register-Subtraktionsbefehl wird daher zusätzlich der folgende C-Code zum Setzen des Bedingungscode-Registers r[CC] generiert:

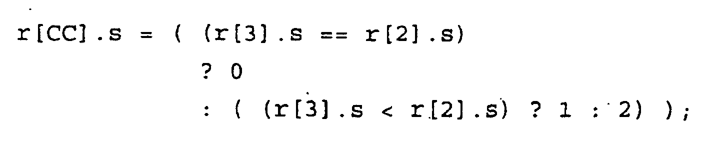

In dem hier beschriebenen Ausführungsbeispiel werden bei der Umsetzung eines Befehls des Objektcodes OC1 stets C-Befehle erzeugt, die den Zustand des Bedingungscode-Registers und sonstiger Spezialregister der Ursprungshardware M1 geeignet nachbilden. Für die hier ausschließlich betrachteten nicht-privilegierten Programme brauchen jedoch nur wenige Hardwarestrukturen der Ursprungshardware M1 modelliert zu werden.

Um die Ausführungsgeschwindigkeit des umgesetzten Programms zu erhöhen, sind in Ausführungsalternativen Optimierungen vorgesehen. Beispielsweise braucht bei mehreren sequentiell ausgeführten Befehlen vor einem bedingten Sprungbefehl nur für den letzten Befehl vor dem Sprungbefehl der Bedingungscode erzeugt zu werden, da alle früheren Bedingungscodes dadurch überschrieben werden.

Bei der Umsetzung des Objektcodes OC1 werden Zugriffe auf Speicherbereiche der Ursprungshardware M1 auf entsprechende Zugriffe im Datenteil DT2 des Programmcodes PC2 abgebildet. So wird beispielsweise der Objektcode für den Register-Ladebefehl
L R3, ENDAREA
in den C-Code
r[3].u = *(unsigned long int *) (r[10].u + 226);
umgesetzt, wobei R10 als Basisregister dient und 226 der Offset der symbolischen Adresse ENDAREA in dezimaler Notation ist. Das Bedingungscode-Register wird in der hier beispielhaft beschriebenen Assemblersprache bei Ladebefehlen nicht verändert.

Hardwarenahe Befehle im Objektcode OC1, die sich nicht vollständig durch C-Befehle abbilden lassen, werden dadurch umgesetzt, daß in den Codeteil CODE ein Aufruf einer Assemblerroutine aus der Bibliothek BIB aufgenommen wird. Die Bibliothek BIB ist für die Zielhardware M2 fest vorgegeben und enthält Einträge für diejenigen Befehle der Ursprungshardware M1, die unmittelbar durch Maschinencode der Zielhardware M2 ausgeführt werden sollen. Unter den hier umzusetzenden nicht-privilegierten Befehlen erfordern jedoch nur wenige einen Aufruf der Assemblerbibliothek BIB (beispielsweise Synchronisationsbefehle für den Speicherzugriff).

.Zur Umsetzung von Sprungbefehlen im Objektcode OC1 wird die modulglobale Sprungtabelle TAB im generierten Programmteil PT2 verwendet. Die Sprungtabelle TAB enthält einen Verzweigungsbefehl ("switch") der Sprache C, der für jede Befehlsadresse des Objektcodes OC1 einen Eintrag ("case") mit der Sprungzieladresse dieses Befehls aufweist. Als Sprungziele werden die im Codeteil CODE definierten Labels in die Sprungtabelle TAB eingetragen, während die mit #define festgelegten symbolischen Bezeichnungen der besseren Lesbarkeit der Sprungzieladressen dienen. Im folgenden ist beispielhaft ein Auszug aus einer Sprungtabelle TAB gezeigt:

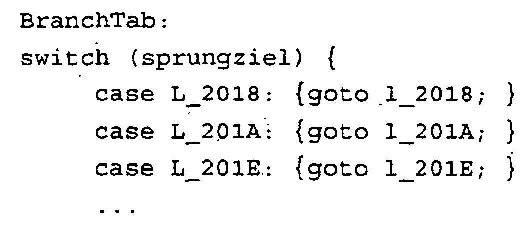

Um im umgesetzten C-Code einen Sprung auszuführen, wird eine Sprungzieladresse berechnet und zur Sprungtabelle TAB verzweigt. Beispielsweise wird ein unbedingter Sprungbefehl zu einer symbolischen Marke STARTO mit dem dezimalen Offset 14 in den C-Code
sprungziel = r[10].u + 14;
goto BranchTab;
umgesetzt, wobei R10 eine Basisadresse enthält. Bei bedingten Sprüngen wird ein entsprechender if/then-Befehl im Codeteil CODE generiert, dessen if-Teil beispielsweise eine Abfrage des Bedingungscode-Registers aufweist.

In Ausführungsalternativen werden bei der Codeanalyse (Schritt 14 in **FIG 2**) Informationen darüber ermittelt, welche Befehle des ursprünglichen Objektcodes OC1 mögliche Sprungziele sind. In diesem Fall brauchen im Programmteil PT2 nur die möglichen Sprungziele mit einem Label gekennzeichnet zu werden. Dadurch wird der Kontrollfluß erheblich effizienter, und die Möglichkeiten der Optimierung durch den C-Kompiler werden besser ausgeschöpft, da nicht mehr jede aus einem Befehl im ursprünglichen Objektcode OC1 generierte Gruppe von C-Befehlen durch ein Label isoliert wird.

In weiteren Ausführungsalternativen dient als Sprache für den erzeugten Programmteil PT2 eine andere höhere Programmiersprache oder eine Assemblersprache. Wenn im letztgenannten Fall die Assemblersprache der Ursprungshardware M1 verwendet wird, wird durch das Verfahren eine Disassembler-Funktionalität erreicht. Der so erzeugte Assembler-Sourcecode kann manuell modifiziert oder durch andere Verfahren umgesetzt werden.

Bei dem bisher beschriebenen Umsetzverfahren ist ein komplett gebundener Objektcode vollständig in ein C-Programm umgesetzt worden. Das C-Programm hatte die in **FIG 3** dargestellte Form mit einer "main"-Funktion, die gegebenenfalls weitere, zur Gliederung dienende Funktionen aufruft. Im komplexeren, allgemeinen Fall bildet der umzusetzende Objektcode OC1 jedoch nur einen Teil eines größeren Programmsystems, der mit den anderen Modulen-wie bisher kooperieren soll. Die anderen Module können ebenfalls durch das hier beschriebene Verfahren umgesetzt worden sein. Sie können jedoch zum Beispiel auch auf der Zielhardware M2 dynamisch interpretiert werden.

Um einen gegenseitigen Programmaufruf zwischen den durch das hier beschriebene Verfahren umgesetzten Modulen und gegebenenfalls weiteren Modulen zu ermöglichen, werden Assemblerroutinen verwendet, die bei der Codegenerierung (Schritt 18 in **FIG 2**) vom Codetransformator CT in den Verknüpfungsteil VT2 eingefügt werden. Ferner weist der generierte Programmteil PT2 kein "main"-Modul mehr auf, sondern nur eine normale C-Funktion. Beim Aufruf von außen werden die Abbilder der Hardwareregister der Ursprungsmaschine M1 sowie Zusatzinformationen über den gewünschten Einsprungpunkt ("entry") übergeben, wie dies unten noch genauer beschrieben wird.

Bei dem in **FIG 4** gezeigten Programmsystem für die Ursprungshardware M1 sind zwei Objektcode-Programmodule OC und OC1 vorgesehen. Das Modul OC1 besitzt einen Einsprungpunkt ("entry") E1, der vom Modul OC durch einen Aufruf 28 ange-Sprungen wird. Nach dem Abarbeiten einer geeigneten Funktion erfolgt ein Rücksprung 30 aus dem Modul OC1 an eine Stelle X1 des Moduls OC.

Von den beiden Modulen OC und OC1 soll nur das Modul OC1 in einen äquivalenten Programmcode PC2 umgesetzt werden, wie dies in **FIG 5** gezeigt ist. Um die gegenseitigen Aufrufe zwischen dem Modul OC und dem Programmcode PC2 zu ermöglichen, erzeugt der Codetransformator CT mehrere Assemblerroutinen im Verbindungsteil VT2.

Wenn aus dem Objektcode OC eine Funktion des Programmcodes PC2 aufgerufen werden soll, muß der zum Aufrufzeitpunkt aktuelle Stand der Hardwareregister dem C-Programmteil PT2 in Form eines Parameters übergeben werden. Ferner muß die Adresse des Einsprungpunkts E1 als Parameter übergeben werden, um im Programmteil PT2 zu diesem Einsprungpunkt E1 verzweigen zu können.

Genauer gesagt, wird der Aufruf 28 von **FIG 4** in drei in **FIG 5** gezeigte Schritte unterteilt. Im ersten Schritt 28a wird aus dem Objektcode-Modul OC der Einsprungpunkt E1 im Assemblercode des Verknüpfungsteils VT2 aufgerufen. Dieser Assemblercode führt einen Aufruf 28b der (einzigen) im Programmteil PT2 enthaltenen C-Funktion mit den aktuellen Werten der Hardwareregister und der Adresse des Einsprungpunkts E1 als Parameter durch. Schließlich erfolgt in der C-Funktion des Programmteils PT2 eine Verzweigung 28c an den Einsprungpunkt E1. Die Verzweigung 28c wird gemäß der übertragenen Einsprungpunktadresse mittels einer Sprungtabelle ausgeführt.

Soll dagegen aus dem Programmteil PT2 eine Routine im Objektcode OC aufgerufen werden, wie dies in **FIG 4** beim Rücksprung 30 der Fall ist, muß der aktuelle Registerstand, wie er im Programmteil PT2 in C-Variablen gehalten wird, an das aufgerufene Assemblerprogramm übergeben werden. Dieser Aufruf erfolgt in zwei in **FIG 5** gezeigten Schritten 30a und 30b.

In Schritt 30a wird eine Assemblerroutine EXIT im Verknüpfungsteil VT2 aufgerufen. Als Parameter werden die aktuellen Werte der Registervariablen und die Zieladresse im Objektcode OC an die Routine EXIT übergeben. Die Assemblerroutine EXIT lädt nun die Hardwareregister der Zielmaschine M2 mit den aktuellen werten und verzweigt, in Schritt 30b, an die gewünschte Zieladresse, hier die Adresse X1.

Wenn der Programmteil PT2 mehrere Einsprungpunkte aufweist, sind entsprechend viele Einsprungpunkte im Verknüpfungsteil VT2 vorgesehen. Bei einem Sprung in den Programmcode PC2 wird also die Zieladresse im Programmteil PT2 erst von der angesprungenen Assemblerroutine im Verknüpfungsteil VT2 gesetzt. Im Gegensatz dazu wird bei einem Sprung aus dem Programmteil PT2 die Zieladresse als Parameter übergeben, so daß eine einzige Routine EXIT ausreicht.

Nach dem. hier geschilderten Verfahren sind gegenseitige Aufrufe zwischen beliebig vielen Modulen möglich.

In dem hier beschriebenen Ausführungsbeispiel erfolgen auch gegenseitige Aufrufe zwischen Programmteilen, die. beide nach dem erfindungsgemäßen Verfahren umgesetzt worden sind, über die Assemblerroutinen des Verknüpfungsteils VT2. In Ausführungsalternativen wird zur Optimierung diese Situation erkannt und in einen unmittelbaren C-Funktionsaufruf umgewandelt.

## Patentansprüche

1. Verfahren zum Umsetzen eines Objektcodes (OC1) für eine Ursprungshardware (M1) in einen äquivalenten Programmcode (PC2), der einen Programmteil (PT2) und einen Datenteil (DT2) aufweist, wobei
ein Codetransformator (CT) jeden Befehl des Objektcodes (OC1) für die Ursprungshardware (M1) analysiert und daraus mindestens einen entsprechenden Eintrag im Programmteil (PT2) des Programmcodes (PC2) erzeugt,
wobei in den Datenteil (DT2) des Programmcodes (PC2) ein Anteil des Objektcodes (OC1) für die Ursprungshardware (M1) aufgenommen wird,
daß der Anteil des in den Datenteil (DT2) des Programmcodes (PC2) aufgenommenen Objektcodes (OC1) für die Ursprungshardware (M1) mindestens dem Datenteil (DT1) des Objektcodes (OC1) für die Ursprungshardware (M1) und höchstens dem vollständigen Objektcode (OC1) für die Ursprungshardware (M1) entspricht, und
daß als Programmteil (PT2) des Programmcodes (PC2) ein Sourcecode einer höheren Programmiersprache erzeugt wird,
wobei in diesem Sourcecode Zugriffe auf die im Datenteil (DT2) des Programmcodes (PC2) abgebildeten Hardwarestrukturen der Ursprungshardware (M1) zumindest teilweise beibehalten werden.

2. Verfahren nach Anspruch 1,
**dadurch gekennzeichnet, daß** der Datenteil (DT2) des umgesetzten Programmcodes (PC2) ausschließlich von dem Objektcode (OC1) für die Ursprungshardware (M1) oder Teilen davon gebildet wird.

3. Verfahren nach Anspruch 1 oder 2,
**dadurch gekennzeichnet, daß** als Programmteil (PT2) des umgesetzten Programmcodes (PC2) ein Sourcecode der Sprache C erzeugt wird.

4. Verfahren nach Anspruch 3,
**dadurch gekennzeichnet, daß** Register der Ursprungshardware (M1) als Variablen der höheren Programmiersprache umgesetzt werden.

5. Verfahren nach Anspruch 3 oder Anspruch 4,
**dadurch gekennzeichnet, daß** vorbestimmte Befehle des Objektcodes (OC1) für die Ursprungshardware (M1) als Funktionen- und/oder Prozeduraufrufe der höheren Programmiersprache umgesetzt werden.

6. Verfahren nach einem'der Ansprüche 1 bis 5,
**dadurch gekennzeichnet, daß** der Programmcode (PC2) eine Sprungtabelle (TAB) aufweist, über die Sprungbefehle des Objektcodes (OC1) für die Ursprungshardware (M1) abgewickelt werden.

7. Verfahren nach einem der Ansprüche 1 bis 6,
**dadurch gekennzeichnet, daß** das Verfahren zum Umsetzen von nicht-privilegiertem Objektcode (OC1) vorgesehen ist.

8. Verfahren nach einem der Ansprüche 1 bis 7,
**dadurch gekennzeichnet, daß** eine Analyse des Objektcodes (OC1) für die Ursprungshardware (M1) durchgeführt wird, um mindestens einen Datenteil (DT1) des Objektcodes für die Ursprungshardware (M1) zu identifizieren.

9. Verfahren nach einem der Ansprüche 1 bis 8,
**dadurch gekennzeichnet, daß** der erzeugte Programmcode (PC2) ferner einen Verknüpfungsteil (VT2) enthält, um Sprünge in den erzeugten Programmcode (PC2) und/oder Sprünge aus dem erzeugten Programmcode (PC2) zu ermöglichen.

10. Verfahren nach einem der Ansprüche 1 bis 11,
**dadurch gekennzeichnet, daß** der erzeugte Programmcode (PC2) durch Kompilieren (22) und/oder Assemblieren (22) und/oder Binden (24) in einen auf der Zielhardware (M2) lauffähigen Objektcode (OC2) umgewandelt wird.

## Claims

1. Method for converting an object code (OC1) for a piece of original hardware (M1) into an equivalent program code (PC2) which has a program part (PT2) and a data part (DT2), where
a code transformer (CT) analyses each command in the object code (OC1) for the original hardware (M1) and generates therefrom at least one corresponding entry in the program part (PT2) of the program code (PC2),
where the data part (DT2) of the program code (PC2) accommodates a portion of the object code (OC1) for the original hardware (M1),
the portion of the object code (OC1) for the original hardware (M1) which is accommodated in the data part (DT2) of the program code (PC2) corresponds at least to the data part (DT1) of the object code (OC1) for the original hardware (M1) and at most to the full object code (OC1) for the original hardware (M1), and
the program part (PT2) generated for the program code (PC2) is a source code in a relatively high-level programming language, this source code retaining at least some access operations to the hardware structures of the original hardware (M1) which are mapped in the data part (DT2) of the program code (PC2).

2. Method according to Claim 1,
**characterized in that** the data part (DT2) of the converted program code (PC2) is formed exclusively from the object code (OC1) for the original hardware (M1) or parts thereof.

3. Method according to Claim 1 or 2,
**characterized in that** the program part (PT2) generated for the converted program code (PC2) is a source code in the language C.

4. Method according to Claim 3,
**characterized in that** registers in the original hardware (M1) are implemented as variables in the relatively high-level programming language.

5. Method according to Claim 3 or Claim 4,
**characterized in that** predetermined commands in the object code (OC1) for the original hardware (M1) are implemented as function and/or procedure calls in the relatively high-level programming language.

6. Method according to one of Claims 1 to 5,
**characterized in that** the program code (PC2) has a jump table (TAB) which is used to handle jump commands in the object code (OC1) for the original hardware (M1).

7. Method according to one of Claims 1 to 6,
**characterized in that** the method is intended for converting unprivileged object code (OC1).

8. Method according to one of Claims 1 to 7,
**characterized in that** the object code (OC1) for the original hardware (M1) is analysed in order to identify at least one data part (DT1) in the object code for the original hardware (M1).

9. Method according to one of Claims 1 to 8,
**characterized in that** the generated program code (PC2) also contains a linking part (VT2) in order to permit jumps into the generated program code (PC2) and/or jumps from the generated program code (PC2).

10. Method according to one of Claims 1 to 11,
**characterized in that** the generated program code (PC2) is converted by compilation (22) and/or assembly (22) and/or uniting (24) into an object code (OC2) which can be executed on the target hardware (M2).

## Revendications

1. Procédé pour convertir un code objet (OC1) destiné à un matériel d'origine (M1) en un code programme équivalent (PC2) qui comporte une partie de programme (PT2) et une partie de données (DT2),
dans lequel un transformateur de code (CT) analyse chaque instruction du code objet (OC1) destiné au matériel d'origine (M1) et produit à partir de là au moins un enregistrement correspondant dans la partie de programme (PT2) du code programme (PC2),
dans lequel une partie du code objet (OC1) destiné au matériel d'origine (M1) est enregistrée dans la partie de données (DT2) du code programme (PC2),
**caractérisé par le fait que**
la partie du code objet (OC1) destiné au matériel d'origine (M1) et enregistré dans la partie de données (DT2) du code programme (PC2) correspond au moins à la partie de données (DT1) du code objet (OC1) destiné au matériel d'origine (M1) et au plus à la totalité du code objet (OC1) destiné au matériel d'origine (M1), et
on produit comme partie de programme (PT2) du code programme (PC2) un code source en un langage de programmation supérieur, des accès aux structures matérielles, reproduites dans la partie de données (DT2) du code programme (PC2), du matériel d'origine (M1) étant au moins' partiellement conservés dans ce code source.

2. Procédé selon la revendication 1,
**caractérisé par le fait que** la partie de données (DT2) du code programme converti (PC2) est formée exclusivement par le code objet (OC1) destiné au matériel d'origine (M1) ou par des parties de celui-ci.

3. Procédé selon la revendication 1 ou 2,
**caractérisé par le fait qu'**on produit comme partie de programme (PT2) du code programme converti (PC2) un code source en langage C.

4. Procédé selon la revendication 3,
**caractérisé par le fait qu'**on convertit des registres du matériel d'origine (M1) en variables du langage de programmation supérieur.

5. Procédé selon la revendication 3 ou 4,
**caractérisé par le fait qu'**on convertit des instructions prédéterminées du code objet (OC1) destiné au matériel d'origine (M1) en appels de fonctions et/ou de procédures du langage de programmation supérieur.

6. Procédé selon l'une des revendications 1 à 5,
**caractérisé par le fait que** le code programme (PC2) comporte un tableau de saut (TAB) par l'intermédiaire duquel des instructions de saut du code objet (OC1) destiné au matériel d'origine (M1) sont exécutées.

7. Procédé selon l'une des revendications 1 à 6,
**caractérisé par le fait que** le procédé est prévu pour convertir du code objet (OC1) non privilégié.

8. Procédé selon l'une des revendications 1 à 7,
**caractérisé par le fait qu'**on effectue une analyse du code objet (OC1) destiné au matériel d'origine (M1) pour identifier au moins une partie de données (DT1) du code objet destiné au matériel d'origine (M1).

9. Procédé selon l'une des revendications 1 à 8,
**caractérisé par le fait que** le code programme produit (PC2) contient en plus une partie de combinaison (VT2) pour permettre des sauts dans le code programme produit (PC2) et/ou des sauts hors du code programme produit (PC2).

10. Procédé selon l'une des revendications 1 à 11,
**caractérisé par le fait qu'**on transforme le code programme produit (PC2) par compilation (22) et/ou assemblage (22) et/ou lien (24) en un code objet (OC2) capable de s'exécuter sur le matériel de destination (M2).
